Europäisches Patentamt

European Patent Office

Office européen des brevets

(19)

(11) Veröffentlichungsnummer : **0 036 967**
**B1**

(12)

# EUROPÄISCHE PATENTSCHRIFT

(45) Veröffentlichungstag der Patentschrift :
04.07.84

(21) Anmeldenummer : 81101602.1

(22) Anmeldetag : 06.03.81

(51) Int. Cl.³ : **B 29 C 17/07**, B 32 B 1/02,
B 60 K 15/02

(54) Koextrusions-Blas-verfahren zum Herstellen von Hohlkörpern aus Kunststoff.

(30) Priorität : 12.03.80 DE 3009463

(43) Veröffentlichungstag der Anmeldung :
07.10.81 Patentblatt 81/40

(45) Bekanntmachung des Hinweises auf die Patenterteilung : 04.07.84 Patentblatt 84/27

(84) Benannte Vertragsstaaten :
AT BE CH DE FR GB IT LI LU NL SE

(56) Entgegenhaltungen :
DE-A- 2 359 447
DE-B- 1 950 662
DE-B- 2 423 503
DE-B- 2 604 247
GB-A- 1 443 170
GB-A- 2 006 108
US-A- 4 079 850
TECHN. MITT. KRUPP-WERKSBERICHTE, Band 37,
Nr. 1, 1979 R. HEGELE et al. "Herstellung mehrschichtiger Kunststoff-Hohlkörper nach dem Coextrusions-
Blasverfahren" Seiten 1 bis 12
JAPAN PLASTICS AGE, Band 17, Nr. 167, Mai - Juni
1979 Tokyo E. HORIUCHI "Characteristics and Application Potentials of Large Multilayer Blow Molding
Machine - Molding of 3-Layer Fuel Tank -" Seiten 21
bis 26

(73) Patentinhaber : **Kautex-Werke Reinold Hagen Aktiengesellschaft**
D-5300 Bonn-Holzlar 1 (DE)

(72) Erfinder : **Lehnard, Jakob**
D-5451 Horhausen (DE)

(74) Vertreter : **Koepsell, Helmut, Dipl.-Ing.**
Mittelstrasse 7
D-5000 Köln 1 (DE)

## Beschreibung

Die Erfindung betrifft ein Koextrusions-Blasverfahren zum Herstellen von Hohlkörpern aus Kunststoff gemäß dem ersten Teil des Anspruchs 1.

Hohlkörper unter Anwendung dieses Verfahrens hergestellte werden für Füllgüter oder andere Zwecke verwendet, für die die Eigenschaften gebräuchlicher Kunststoffe, insbesondere der Polyolefine, nicht allen Anforderungen genügen. Als typisches Beispiel sei die Permeabilität der Polyolefine für Füllgut und/oder umgebendes Medium genannt. So kann die Permeabilität dieser Materialien bei ihrer Verwendung zur Herstellung von Kraftstofftanks eine Rolle spielen.

Es sind zwar Kunststoffe bekannt, deren Permeabilität beispielsweise für Benzin so gering ist, dass sie die zulässigen Werte nicht überschreitet. Diese Kunststoffe sind jedoch teuer und/oder nicht ohne weiteres verarbeitbar. In vielen Fällen weisen sie auch nicht die mechanischen Eigenschaften der Polyolefine auf, die sie hinsichtlich Festigkeit, Zähigkeit, elastischer Verformbarkeit usw. gerade für Kraftstoffbehälter, insbesondere auch für in Kraftfahrzeugen einzubauende Tanks, besonders geeignet machen.

Aus den vorstehend beschriebenen Gründen werden insbesondere Benzintanks in der Weise hergestellt, dass eine zumeist aus Polyolefin bestehende Tragschicht mit einer für das Füllgut mehr oder weniger undurchlässigen Sperrschicht versehen wird, deren Dicke im allgemeinen wesentlich geringer ist als die der Tragschicht. Diese Sperrschicht kann innenseitig und/oder aussenseitig aufgebracht sein. Da es im allgemeinen aufgrund der unterschiedlichen Eigenschaften des Tragschicht-Materials einerseits und des Sperrschicht-Materials andererseits nicht möglich ist, diese ausreichend fest miteinander zu verbinden, hat es sich als notwendig erwiesen, zwischen Tragschicht und Sperrschicht eine zusätzliche Schicht aus einem anderen Material anzuordnen, der lediglich die Aufgabe zukommt, als Haftvermittler zwischen Tragschicht und Sperrschicht zu dienen. Diese Haftvermittler-Schicht muss somit aus einem Material bestehen, welches sowohl mit dem die Tragschicht bildenden Material als auch mit dem die Sperrschicht bildenden Material eine ausreichend feste Verbindung eingeht, wobei es möglich ist, dass die Verbindung z. B. zwischen Tragschicht und Haftvermittlerschicht durch Schweissen zustande kommt, die Verbindung zwischen Haftvermittlerschicht und Sperrschicht jedoch adhäsiver Art ist. Die Festigkeit der Verbindung zwischen Haftvermittlerschicht und Sperrschicht muss in jedem Fall der Möglichkeit Rechnung tragen, dass bei äusserer Anordnung der Sperrschicht das Füllgut durch die innen befindliche Tragschicht hindurch diffundiert und sich zwischen Haftvermittlerschicht und Sperrschicht sammelt, wobei der resultierende Gasdruck auf die äussere Sperrschicht einwirkt. Es muss vermieden werden, dass die Sperrschicht unter der Wirkung dieses Gasdruckes von der Tragschicht bzw. der Haftvermittlerschicht abgehoben wird. Dies kann vermieden werden, wenn die Sperrschicht als innere Schicht angeordnet ist. Dies ist jedoch aus noch zu erörternden Gründen nicht oder nur mit Schwierigkeiten möglich. Bei einem durch die DE-A 2 604 257 bekannten Verfahren der eingangs beschriebenen Art wird zunächst ein mehrschichtiger Vorformling in Gestalt eines Schlauchabschnittes extrudiert, der dann in einer Blasform in der üblichen Weise unter Anwendung von innerem Überdruck zum Behälter aufgeweitet wird. Die zum Herstellen des Vorformlinges erforderliche Extrusionsvorrichtung weist zwangsläufig einen sehr komplizierten Aufbau auf, da sie mit wenigstens drei Extrudern — einen für das die Tragschicht bildende Material, einen für das die Haftvermittlerschicht bildende Material und einen für das die Sperrschicht bildende Material — versehen sein muss.

Ein weiterer, wesentlicherer Nachteil besteht jedoch darin, dass es nicht oder nur mit Schwierigkeiten möglich ist, den bei der Herstellung unvermeidbaren Anteil an Ausschuss wieder zu verwerten. Dies gilt auch für die zumindest bei sehr vielen Herstellungsverfahren unvermeidbaren Abfallteile. Derartige Abfallteile entstehen beim Extrusions-Blasverfahren in jedem Fall an den Enden des schlauchförmigen Vorformlings. Bei kompliziert geformten Hohlkörpern, insbesondere beispielsweise bei in Kraftfahrzeugen einzubauenden Kraftstofftanks, ist das Entstehen von Abfallteilen unabhängig vom Herstellungsverfahren häufig unvermeidbar, wobei die Menge des Abfalls pro Vorformling bis zu 50 % des letzteren betragen kann.

Die mangelnde Verwertbarkeit von Ausschuss, der aufgrund der hohen Qualitätsanforderungen bei Benzintanks grösser sein wird als im Normalfall, und von Abfallteilen ist beim bekannten Ko-Extrusions-Blasverfahren, bei welchem von dreischichtigen, koextrudierten Vorformlingen ausgegangen wird, darauf zurückzuführen, dass die Teile aus unterschiedlichen Materialien bestehen, so dass auch im Falle der Wiederaufbereitung dieses Materials kein einheitliches Produkt entsteht. Zwar ist es im allgemeinen möglich, das die Tragschicht bildende Polyolefin einerseits und das die Haftvermittlerschicht bildende Material andererseits miteinander zu mischen und wieder zu verwenden, da diese Materialien einander so ähnlich sind, dass die bestehenden Unterschiede bei einer Wiederverwertung nicht ins Gewicht fallen. Hingegen muss davon ausgegangen werden, dass die für die Sperrschicht verwendeten Werkstoffe bezüglich ihres chemischen Aufbaus und ihrer physikalischen Eigenschaften so verschieden sind von den normalerweise für die Tragschicht verwendeten Polyoelefinen, dass beide Werkstoffe nicht miteinander gemischt werden können. Im Ergebnis bedeutet dies, dass bei Anwendung des bekannten Verfahrens die Ausschuss- und Abfallteile nicht oder nur in sehr beschränktem Umfang wiederverwertet werden können, wodurch die Fertigung zwangsläufig eine erhebliche Verteuerung erfährt.

Eine andere Schwierigkeit kann im Zusammenhang mit den Schweissnähten entstehen, die beim Herstellen von Hohlkörpern im Extrusions-Blasverfahren unvermeidbar sind und im Zuge von Abquetschvorgängen am Vorformling gebildet werden. Beim Schliessen der im allgemeinen zweiteiligen Hohlform um den Vorformling wird dieser normalerweise an einem Ende verschlossen, wobei zugleich überschüssiges Material abgequetscht wird. Derartige Abquetschvorgänge unter gleichzeitiger Bildung einer Schweissnaht können auch an anderen Bereichen des Vorformlinges stattfinden, wenn dies zur Anpassung an die Gestalt des Enderzeugnisses, also des herzustellenden Hohlkörpers, erforderlich ist. Wenn die im allgemeinen aus Polyäthylen oder einem anderen Polyolefin bestehende Tragschicht innen angeordnet ist, bestehen bezüglich der Herstellung einer einwandfreien Schweissnaht, deren Stärke allen im praktischen Betrieb auftretenden Beanspruchungen genügt, im allgemeinen keine Schwierigkeiten, da die für die Tragschicht in Frage kommenden Materialien entsprechende Eigenschaften aufweisen. Hinzu kommt, dass die Dicke der Tragschicht durchweg wesentlich grösser ist als die der anderen Schichten, so dass unabhängig davon, ob die anderen Schichten an der Schweissnahtbildung mehr oder weniger stark beteiligt sind, allein die von der Tragschicht gebildete Schweissnaht ausreicht, um allen praktischen Anforderungen zu genügen. Wenn jedoch die Tragschicht aussen angeordnet ist, ergibt sich die unvermeidbare Konsequenz, dass beim Abquetsch- und Schweissvorgang einander gegenüberliegende Bereiche der innen angeordneten Sperrschicht gegeneinander gedrückt und bei gleichzeitigem Abquetschen des überschüssigen Materials miteinander verschweisst werden müssen. Die Sperrschicht ist jedoch im allgemeinen zu dünn, als dass sie selbst dann, wenn sie gute Schweisseigenschaften haben sollte, eine Schweissnaht mit ausreichender Festigkeit bilden könnte. Entsprechendes gilt auch für die als Haftvermittler dienende Schicht. Die aussen befindliche Tragschicht ist bei dieser Anordnung der Schichten an der Schweissnahtbildung nicht oder nur in unvollkommener Weise beteiligt, da zwischen den beiden einander gegenüberliegenden Bereichen der Tragschicht, die durch Schweissen miteinander verbunden werden sollten, die anderen beiden Schichten, d. h. Haftvermittlerschicht und Sperrschicht, liegen und letztere aus den eingangs genannten Gründen keine gute Schweissverbindung mit dem die Tragschicht bildenden Material eingeht.

Zur Vermeidung dieser Schwierigkeiten ist bereits der Vorschlag gemacht worden, bei der Ko-Extrusion des im allgemeinen schlauchförmigen Vorformlinges so zu verfahren, dass die Haftvermittlerschicht und die Sperrschicht nur über einen bestimmten Teilabschnitt der Länge des Vorformlinges extrudiert werden, wobei die Endbereiche, an denen Abquetscht- und Schweissvorgänge vorgenommen werden, nur aus der Tragschicht bestehen. Dies würde den Teil der Abfallstücke, die nur aus einem Material bestehen, wieder verwendbar machen. Die Vorrichtung zur Durchführung einer solchen Verfahrensweise ist jedoch ausserordentlich kompliziert und damit aufwendig sowie störanfällig. Hinzu kommt, dass es normalerweise nicht möglich ist, den Vorformling mit einer Präzision zu extrudieren, die erforderlich ist, um sicherzustellen, dass von Arbeitszyklus zu Arbeitszyklus ein bestimmter Abschnitt des Vorformlings, der mit Haftvermittlerschicht und Sperrschicht versehen ist, genau passend zur Hohlform, in welcher der Vorformling zum Hohlkörper aufgeweitet wird, angeordnet ist. Im übrigen würde ein derartiges Verfahren die Wiederverwendbarkeit von seitlich am Vorformling abgequetschten Abfallteilen nach wie vor nicht ermöglichen.

Ferner ist durch die DE-A 2 236 564 ein Kraftstoffbehälter aus thermoplastischem Kunststoff bekannt, dessen Fertigung so erfolgt, daß zunächst ein lediglich einschichtiger Hohlkörper hergestellt wird. Die beiden anderen Schichten, also Haftvermittlerschicht und Sperrschicht werden gemeinsam in einem weiteren Verfahrensschicht aufgebracht. Dies geschieht in der Weise, daß zunächst die beiden nachträglich aufzubringenden Schichten in die Form einer Verbundfolie gebracht werden, die dann im Tiefziehverfahren oder dgl. eine Formgebung erhält, um sie an die Gestalt des herzustellenden Hohlkörpers anzupassen. Der so hergestellte und geformte Zuschnitt wird dann beispielsweise während des Aufweitens des einschichtigen Vorformlings mit diesem bzw. dem daraus beim Aufweitvorgang entstehenden Hohlkörper verbunden. Diese Fertigungsweise ist insbesondere aufgrund der zweifachen Formgebung und der vorangehenden Herstellung einer Verbundfolie außerordentlich kompliziert und aufwendig, zumal auch hierbei im Zusammenhang mit dem Zuschneiden der Verbundfolien immer noch soviel Abfallmaterial entsteht, daß dieses als Kostenfaktor nicht unberücksichtigt bleiben kann.

Der Erfindung liegt die Aufgabe zugrunde, das Verfahren der eingangs beschriebenen Art so abzuwandeln, insbesondere zu vereinfachen, dass die Nachteile bekannter Verfahren vermieden werden. So sollen die Einschränkungen bezüglich der Verwertung der Abfallteile und des Ausschusses beseitigt oder doch zumindest sehr stark verringert werden. Ferner wird angestrebt, die Schwierigkeiten im Zusammenhang mit der Herstellung einer allen praktischen Anforderungen genügenden Schweissnaht an jenen Stellen, an denen bei gleichzeitiger Abquetschung von überschüssigen Teilen des Vorformlinges zugleich eine Verbindung zwischen zwei gegenüberliegenden Bereichen desselben bzw. des resultierenden Hohlkörpers herzustellen ist, zu vermeiden bzw. wesentlich zu reduzieren. Die zur Durchführung des Verfahrens benötigten Vorrichtungen sollen einfach, zumindest nicht komplizierter und aufwendiger sein als die zur Durchführung bekannter Verfahren benutzten Vorrichtungen. Bezüglich der Auswahl der für eine bestimmte Funktion oder Schicht zu verwendenden Kunststoffe soll ein Optimum möglich sein.

Diese Aufgabe soll durch die im Kennzeichnenden Teil des Anspruchs 1 angegebenen Merkmale gelöst werden.

Bei diesem Verfahren wird, wenn z. B. ein dreischichtiger Behälter oder anderer Hohlkörper hergestellt werden soll, lediglich ein zweischichtiger Vorformling hergstellt und im Blasverfahren weiter verarbeitet. Der Vorformling weist lediglich die Tragschicht und die Haftvermittler-Schicht auf. Da es jedenfalls bei der Verwendung von Polyolefinen für die Tragschicht (en) ohne weiteres möglich ist, als Haftvermittler ein dem jeweiligen Polyolefin chemisch verwandtes Material einzusetzen, sind Rückführung und Wiederverwertung irgendwelcher Abfall- und Ausschussteile nach Herstellung des Zwischenerzeugnisses ohne Schwierigkeiten möglich. Probleme bezüglich der Schweissnahtbildung werden vermieden, da selbst dann, wenn die Haftvermittler-Schicht innen angeordnet ist, aufgrund der chemischen Verwandtschaft beider Materialien einwandfreie Schweissnähte ohne Schwierigkeiten herstellbar sind. Ausserdem werden erhebliche Mengen des die weitere Schicht bildenden Materials eingespart, da dieses Material auf den fertigen, also bereits von Abfallteilen befreiten Hohlkörper aufgebracht werden kann. Ein weiterer Vorteil des Verfahrens besteht darin, dass es auch ohne Schwierigkeiten möglich ist, nur Teilbereiche des fertigen Hohlkörpers mit der weiteren Schicht zu versehen. So ist beispielsweise die Permeabilität der meisten für die Tragschicht in Frage kommenden Materialien abhängig von deren Wand- bzw. Schichtdicke. An einem Kraftfahrzeugtank wird es Bereiche geben, in denen die Dicke der Tragschicht aus herstellungsmässig bedingten Gründen so gross ist, dass die noch verbleibende Permeabilität innerhalb der zulässigen Grenzen liegt. Dies kann beispielsweise für den Bereich des Einfüllstutzens gelten, der oft eine erhebliche Länge aufweist. Ein weiterer Vorteil des Verfahrens gemäss der Erfindung besteht darin, dass das die weitere Schicht, also beispielsweise die Sperrschicht, bildende Material ausgewählt werden kann, ohne dass auf seine Verarbeitbarkeit beispielsweise in einem Extruder oder auf seine Thermostabilität Rücksicht genommen zu werden braucht. Bei bekannten Verfahren, bei welchen die weitere Schicht gemeinsam mit Haftvermittler-Schicht und Tragschicht koextrudiert wird, können für die weitere Schicht nur solche Materialien verwendet werden, die extrudierbar sind und die dabei unvermeidbar auftretenden Belastungen z. B. durch hohe Temperaturen, durch Druck und grosse Scherkräfte aufzunehmen in der Lage sind. D. h., dass bei Anwendung der Erfindung bezüglich der Auswahl der für die weitere Schicht verwendbaren Materialien bezüglich deren Verwendbarkeit im Herstellungsverfahren keine Beschränkungen zu beachten sind. So kann beispielsweise PVDC in Form einer hochmolekularen Lösung verwendet werden. Dieses Material ist nicht extrudierbar. Das nachträgliche Aufbringen der weiteren Schicht hat zudem den Vorteil, dass eine gleichmässige oder — falls notwendig oder zweckmässig — eine in Abhängigkeit von der Dicke der übrigen Schichten variierende Dicke der weiteren Schicht aufgebracht werden kann, wenn diese beispielsweise die Funktion einer Sperrschicht hat. Im allgemeinen wird es verfahrenstechnisch zweckmässig sein, eine gleichmässig starke Schicht aufzubringen. Es wird in jedem Fall jenes Problem vermieden, welches beim Aufweiten eines von vornherein mit einer weiteren Schicht versehenen Vorformlings dadurch entstehen kann, dass aufgrund unterschiedlicher Aufweitverhältnisse die weitere Schicht in unterschiedlicher Weise gereckt wird mit dem Ergebnis, dass im Bereich der stärksten Reckung die weitere Schicht am Fertigerzeugnis am dünnsten ist. D. h., dass die Dicke der weiteren Schicht beim bekannten Verfahren in Abhängigkeit von der nach der Reckung verbleibenden geringsten Stärke gewählt werden muss mit dem Ergebnis, dass in grossen Bereichen des Hohlkörpers diese Schicht eine grössere Stärke aufweist als für ihre Funktion notwendig ist. D. h., dass mehr Material als erforderlich verbraucht wird. Da das die weitere Schicht bildende Material aufgrund der ihm zugedachten besonderen Funktion im Normalfall das teuerste Material aller Schichten sein wird, stellt die Möglichkeit einer Materialeinsparung gerade an der weiteren Schicht einen besonderen Vorteil des Verfahrens gemäss der Erfindung dar. Das nachträgliche Aufbringen der weiteren Schicht auf das Zwischenerzeugnis hat zudem den Vorteil, dass die Schicht in jedem Fall durchgehend und homogen, also ohne Unterbrechung durch Schweissnähte oder dgl. gebildet werden kann. Bei Hohlkörpern, die nach dem einleitend beschriebenen bekannten Verfahren hergestellt werden, bei welchem bereits der Vorformling eine Schicht aus dem weiteren Material aufweist, also im Normalfall dreischichtig ausgebildet ist, kann es bei aussen befindlicher weiterer Schicht, also beispielsweise Sperrschicht, an den Abquetsch- und Schweissnähten dazu kommen, dass die zu beiden Seiten der Schweissnaht liegenden Bereiche der Sperrschicht oder dgl. nicht miteinander verbunden sind, so dass sie sich im Laufe der Zeit — bedingt auch durch die unter Umständen im Querschnitt etwas gewölbte Form der Schweissnaht — von der darunter befindlichen Schicht abheben. D. h., dass in diesem Bereich die weitere Schicht die ihr zugedachte Funktion nicht mehr erfüllen kann.

Im allgemeinen wird der Hohlkörper aus den vorerwähnten drei Schichten bestehen. Es ist aber auch möglich, ihn mit mehr, beispielsweise fünf Schichten auszuführen. Die Anordnung kann dabei z. B. so getroffen sein, dass die mittlere Schicht die Tragschicht ist, zu deren beiden Seiten sich jeweils eine Haftvermittlerschicht und eine weitere Schicht befinden. Eine solche Ausgestaltung wird jedoch nur dann in Frage kommen, wenn beispielsweise keine oder nur eine sehr geringe Permeabilität zulässig ist und darüber hinaus das die Sperrschicht bildende Material so beschaffen ist, dass es nur in einer sehr geringen Dicke aufgebracht werden kann. Dies kann beispielsweise auch durch das Verfahren bedingt sein, durch welches das die weitere Schicht bildende Material auf das Zwischenerzeugnis aufgebracht wird. Ein fünfschichtiger Aufbau der Hohlkörperwandung kann auch dann in Frage kommen, wenn die Tragschicht durch eine weitere Schicht sowohl gegenüber dem Füllgut als auch dem den Hohlkörper umgebenden Medium geschützt sein soll, beispielsweise weil das die Tragschicht bildende Material mit dem Füllgut und dem umgebenden Medium chemisch reagiert oder sonstwie durch beide Medien in unerwünschter Weise beeinflusst oder verändert wird.

Eine andere Funktion der weiteren Schicht kann deren elektrische Leitfähigkeit sein, beispielsweise zum Ableiten von statischen Aufladungen.

Das die weitere Schicht bildende Material kann durch Aufspritzen, Aufsprühen, Tauchen, Aufstreichen oder sonstwie in geeigneter Weise aufgebracht werden. Die Stärke dieser Schicht kann dabei so gering sein, dass selbst dann, wenn das sie bildende Material an sich nicht oder nur in geringfügigem Masse elastisch verformbar ist, ist es aufgrund seiner geringen Stärke möglichen elastischen Verformungen, die Tragschicht und Haftvermittler-Schicht ausgesetzt sind, folgen kann. Für die Haftvermittler-Schicht kann beispielsweise chloriertes Polyolefin verwendet werden, das einerseits mit dem Polyolefin der Tragschicht eine einwandfreie und feste Schweissverbindung eingeht, andererseits auch eine ausreichende Haftung der für die weitere Schicht in Frage kommenden Materialien gewährleistet.

Es sind auch bereits Verfahren bekannt, bei welchen die Permeabilität von Kunststoffen durch eine besondere Behandlung herabgesetzt wird. Dazu gehören das Sulfonieren und eine Behandlung unter Verwendung eines Fluor enthaltenden Gases. Beide Verfahren sind teuer und zudem sehr stark umweltbelastend, so dass sie in grösserem Umfang ohne besondere Vorkehrungen nicht anwendbar sind.

Es ist ferner bekannt, die Oberflächen von aus Polyolefinen bestehenden Hohlkörpern zu beflammen, um die Haftungseigenschaften der so behandelten Oberflächen zu verbessern. Diese Behandlung ist beispielsweise vor dem Bedrucken derartiger Hohlkörper allgemein üblich, da im anderen Fall die Druckfarbe nicht ausreichend fest auf der Oberfläche des Hohlkörpers haften würde. Eine derartige Verfahrensweise ist jedoch bei der Fertigung grosser Hohlkörper, beispielsweise in Kraftfahrzeuge einzubauender Tanks, in der Praxis selbst an den aussen liegenden Oberflächen nur sehr schwer mit der notwendigen Genauigkeit durchzuführen, wobei, da praktisch die gesamte äussere Oberfläche beflammt werden müsste, die dazu notwendigen Einrichtungen verhältnismässig kompliziert sein würden. Eine Beflammung der inneren Oberfläche wäre mit ausreichender Genauigkeit kaum durchführbar, zumal die Öffnungen der Behälter, beispielsweise des vorerwähnten Tanks, sehr klein sind. Ausserdem ist es fraglich, ob lediglich durch Beflammen eine Festigkeit der Verbindung zwischen Tragschicht und Sperrschicht herbeigeführt werden könnte, die allen in der Praxis auftretenden Beanspruchungen genügt.

Beim Verfahren gemäss der Erfindung kann die Sperrschicht auch unter Anwendung eines Druckverfahrens, insbesondere des Siebdruckverfahrens, aufgebracht werden. Dies ist bei symmetrisch geformten Objekten, z. B. Flaschen, ohne weiteres möglich. Bei kompliziert geformten Hohlkörpern, z. B. Kfz-Tanks, gilt dies zumindest für jene Bereiche der mit der weiteren Schicht zu versehen Oberfläche, deren Gestalt und Verlauf die Anwendung eines Druckverfahrens ermöglicht. Die übrigen Flächen müssten dann ggf. in einem anderen Arbeitsverfahren mit dem die Sperrschicht bildenden Material versehen werden.

In der Zeichnung sind ein Ausführungsbeispiel zur Erläuterung des Standes der Technik und weitere Ausführungsbeispiele zur Erläuterung der Erfindung dargestellt. Es zeigen ;

Figur 1 einen Längsschnitt durch eine zweiteilige Hohlform mit darin befindlichem, dreischichtigem, schlauchförmigem Vorformling gemäss dem Stand der Technik,

Figur 2 einen Schnitt nach der Linie II-II der Fig. 1,

Figur 3 eine der Fig. 1 entsprechende Darstellung einer weiteren Ausführungsform,

Figur 4 einen Schnitt nach der Linie IV-IV der Fig. 3,

Figur 5 eine der Fig. 1 entsprechende Darstellung eines Ausführungsbeispiels gemäss der Erfindung,

Figur 6 einen Schnitt nach der Linie VI-VI der Fig. 5,

Figur 7 eine der Fig. 1 entsprechende Darstellung eines weiteren Ausführungsbeispiels der Erfindung,

Figur 8 einen Schnitt nach der Linie VIII-VIII der Fig. 7,

Figur 9 die perspektivische Ansicht eines Kraftfahrzeugtanks,

Figur 10 einen Schnitt durch die Wandung des fertigen Tanks.

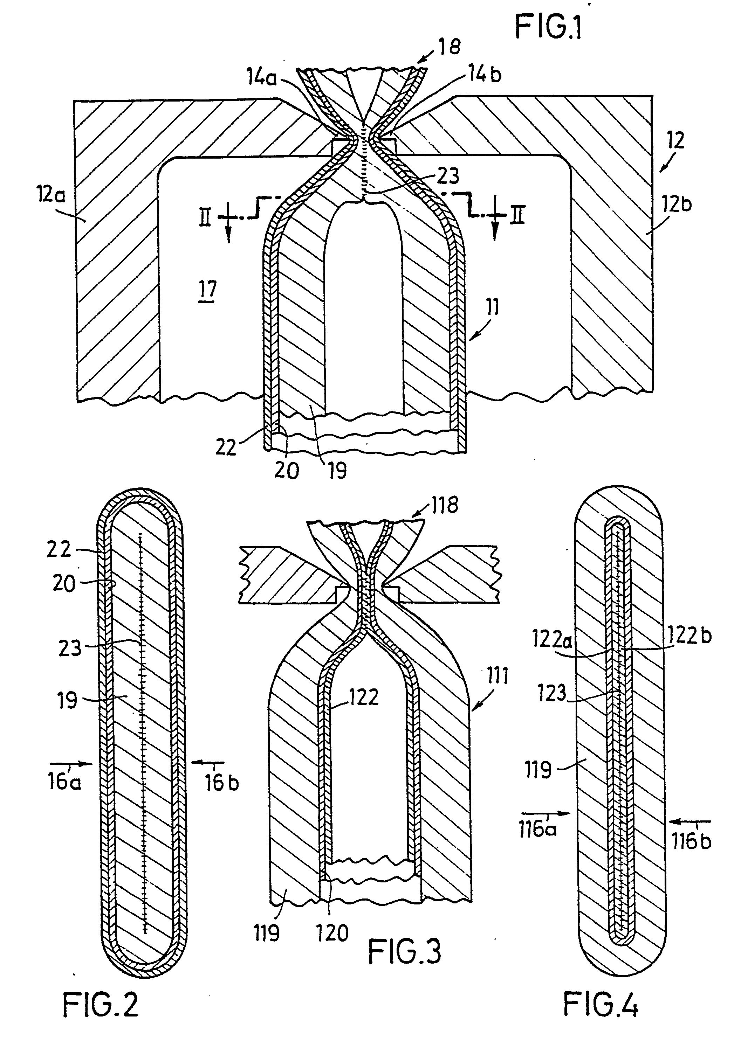

Fig. 1 der Zeichnung zeigt eine Hohlform, wie sie im Extrusions-Blasverfahren allgemein, z. B. in einer Vorrichtung gemäss DE-AS 24 23 503 oder US-PS 39 89 437 benutzt wird.

Ein schlauchförmiger Vorformling 11, der auf einer in der Zeichnung nicht dargestellten Extrusions-Einrichtung hergestellt worden war, wird von einer zweiteiligen Hohlform 12 aufgenommen, deren beide Hälften 12a, 12b in einer Position kurz vor der Schließstellung, in welcher die beiden Formhälften den geringsten Abstand voneinander einnehmen, dargestellt sind. Die beiden Formhälften 12a und 12b sind mit Abquetschkanten 14a, 14b versehen, die im Zuge der Schliessbewegung der beiden Formteile den schlauchförmigen Vorformling 11 zunächst flachdrücken und dann die beiden resultierenden einander gegenüberliegenden Bereiche 16a, 16b unter Bildung einer Schweissverbindung gegeneinander drücken, wobei durch die Abquetschkanten 14a, 14b gleichzeitig oder kurz danach der ausserhalb des Formnestes 17 verbleibende Bereich 18 des Vorformlinges 11 als Abfallteil abgequetscht wird. Normalerweise bleibt dieses Abfallteil über einen dünnen Materialfilm mit dem innerhalb des Formnestes 17 befindlichen Hohlkörper verbunden. Nach der Herausnahme des aufgeweiteten Hohlkörpers aus der Form werden das Abfallteil 18 und ggf. vorhandene weitere Abfallteile abgerissen. Die vorbeschriebenen Zusammenhänge sind beim Extrusions-Blasverfahren allgemein bekannt.

Bei dem in den Figuren 1 und 2 dargestellten Ausführungsbeispiel besteht der Vorformling 11 aus drei Schichten : Der Tragschicht 19, der Haftvermittlerschicht 20 und der Sperrschicht 22. Dabei ist die Anordnung so getroffen, dass die Tragschicht 19 der koaxial zueinander extrudierten Schichten sich innen befindet: Diese Tragschicht ist wesentlich dicker als die beiden anderen Schichten. Sie bestimmt die mechanischen Eigenschaften des herzustellenden Hohlkörpers. Die Qualität des letzteren hängt weitgehend von der Beschaffenheit der Schweissnaht ab, die im Zuge des Verschliessens des Vorformlinges 11 im Bereich 23 entsteht. Die Fig. 1 und 2 machen deutlich, dass die Beschaffenheit der Schweissnaht im wesentlichen bestimmt wird von der Beschaffenheit, insbesondere der Stärke des die Tragschicht 19 bildenden Materials, da diese Schicht innen angeordnet ist und somit beim Aufeinandertreffen der beiden einander gegenüberliegenden Bereiche 16a, 16b es die Bereiche der Tragschicht 19 sind, die miteinander verschweisst werden. Die beiden anderen Schichten 20 und 22 spielen dabei praktisch keine oder nur eine untergeordnete Rolle, zumal sie aufgrund ihrer geringen Stärke ohnehin zur Festigkeit des resultierenden Hohlkörpers und damit auch zur Festigkeit der Schweissnaht nicht viel beitragen können.

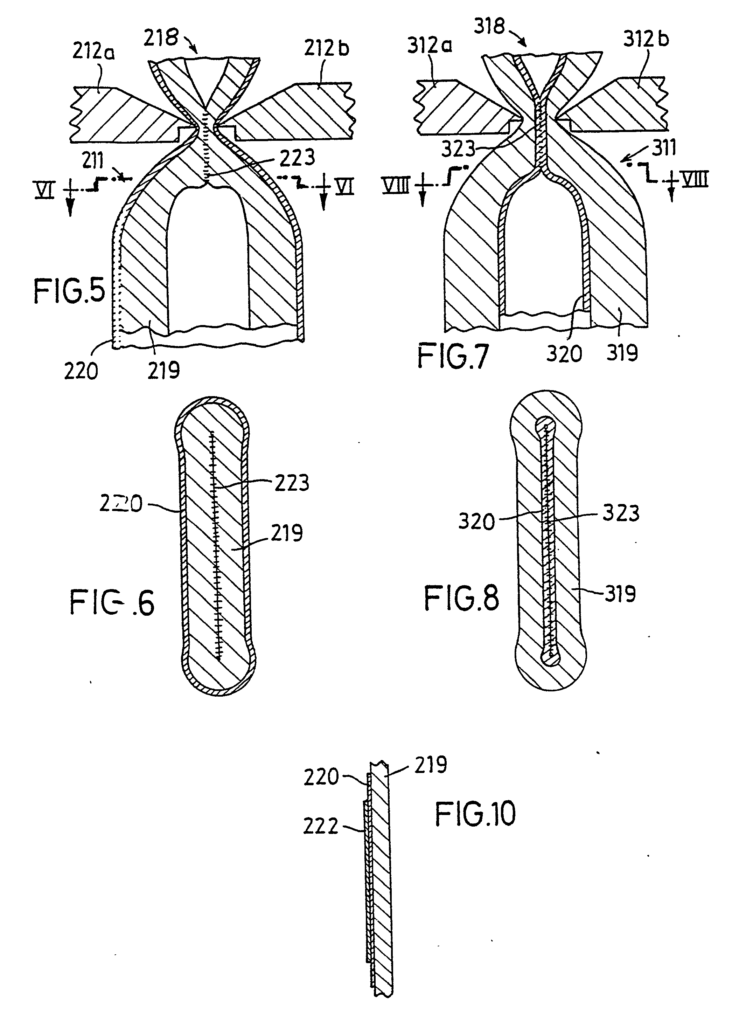

Bei der Anordnung der Schichten 19, 20, 22 gemäss Fig. 1 und 2 werden im allgemeinen bezüglich der Qualität der Schweissnaht 23 keine Probleme entstehen. Andererseits kann die Anordnung der Sperrschicht 22 aussen am Vorformling 11 und damit auch am resultierenden Hohlkörper erhebliche Nachteile zur Folge haben, die es zweckmässiger erscheinen lassen, die Sperrschicht 22 innen anzuordnen. Dies ist der Fall beim Ausführungsbeispiel gemäss den Figuren 3 und 4, in denen mit der Ausführungsform gemäss den Fig. 1 und 2 übereinstimmende Teile mit gleichen, jedoch jeweils um 100 höheren Bezugszeichen versehen sind. Beim Gegeneinanderpressen der beiden einander gegenüberliegenden Bereichen 116a, 116b des schlauchförmigen Vorformlinges 111 kommen die entsprechenden Bereiche 122a, 122b mit der innen liegenden Sperrschicht 122 zur Anlage miteinander. Unter der Voraussetzung, dass das die Sperrschicht bildende Material verschweissbar ist, wird sich hier eine Schweissverbindung 123 herstellen lassen, die jedoch aufgrund der geringen Dicke der Sperrschicht 122 nicht die notwendige Festigkeit aufweist, so dass die Schweißstelle zwangsläufig am fertigen Hohlkörper eine Schwachstelle ist. Aufgrund der Tatsache, dass das Material der — ausreichend dicken — Tragschicht 119 einerseits und das Material der Sperrschicht 122 andererseits sich aufgrund ihrer unterschiedlichen Eigenschaften nicht oder nur in geringem Umfang miteinander verbinden lassen, trägt das Material der Tragschicht 119 zur Bildung einer Schweissnaht oder zur Festigkeit derselben kaum etwas bei. D. h., dass der Vorteil der innen angeordneten Sperrschicht mit Nachteilen erkauft wird, die so gross sind, dass diese Ausführungsform in der Praxis in vielen Fällen nicht realisierbar ist.

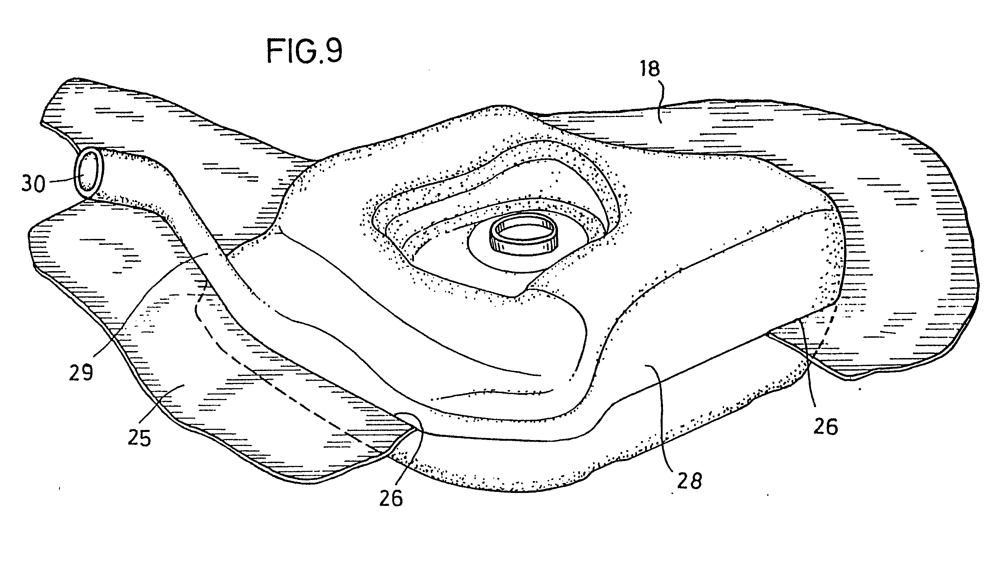

Beiden vorbeschriebenen bekannten Ausführungsformen ist darüber hinaus ein weiterer Nachteil gemeinsam, der darin besteht, dass die Abfallteile 18 bzw. 118 aus drei unterschiedlichen Materialien bestehen, die normalerweise nicht gemeinsam aufbereitet und zurückgeführt werden können. In Fig. 9 ist der dort dargestellte Benzintank noch mit den Abfallteilen 18 und 25 versehen, die über die bereits erwähnten Filme oder Stege 26 mit dem eigentlichen Tank 28 verbunden sind und normalerweise durch einfaches Abreissen entfernt werden können. Das Abfallteil 18 befindet sich dabei an jenem Ende des Tankes, das dem in den Fig. 1 und 3 dargestellten, zu verschliessenden Ende des Vorformlinges entspricht. Am anderen Ende des Tankes befindet sich der Einlaßstutzen 29 mit der Füllöffnung 30. Das diesem Bereich des Tankes zugeordnete Abfallteil 25 ist ebenfalls sehr gross. Tatsächlich beträgt der Abfallanteil des in Fig. 9 dargestellten Ausführungsbeispiels, das einen typischen Benzintank darstellt, etwa 70 %. D. h., dass die Wiederverwertbarkeit dieses Abfallanteiles unter Umständen entscheidend für die Beantwortung der Frage sein kann, ob ein solcher Tank überhaupt wirtschaftlich gefertigt werden kann.

Beim Ausführungsbeispiel gemäss den Fig. 5 und 6 besteht der extrudierte Vorformling 211 aus nur zwei Schichten : Der auch hier wesentlich dickeren Tragschicht 219 und einer äusseren Haftvermittlerschicht 220. Die Schweissnaht 223 weist somit alle für die Herstellung eines einwandfreien Hohlkörpers notwendigen Qualitäten bezüglich Festigkeit, Dichtigkeit usw. auf. Das resultierende Abfallteil 218- und selbstverständlich auch weitere, an anderen Stellen des Vorformlinges 211 befindliche Abfallteile — bestehen nur aus zwei Materialkomponenten, nämlich dem Material der Tragschicht 219 und dem der Haftvermittlerschicht 220, die im Normalfall so ausgewählt werden können, dass die bestehenden Unterschiede einer gemeinsamen Wiederverwertung und Rückführung der Abfallteile nicht im Wege stehen. D. h., dass eine Vermischung der beiden Komponenten bei der Wiedergewinnung zu einem Materialgemisch führt, welches bezüglich seiner Eigenschaften sich so wenig von denen der Tragschicht 219 unterscheidet, dass es ohne weiteres als Tragschicht-Material wiederverwendet werden kann.

Selbstverständlich entsteht in der Hohlform 312a, 312b ein Hohlkörper, der zunächst nur aus den beiden Materialschichten 219 und 220 besteht. Dieser im Gesamt-Herstellungsverfahren ein Zwischenerzeugnis darstellende Hohlkörper wird dann in einem zusätzlichen Arbeitsgang oder gegebenenfalls auch in mehreren Arbeitsgängen mit der Sperrschicht versehen, die sich in diesem Falle aussen befindet, da die Haftvermittlerschicht 220 aussenseitig an der Tragschicht angebracht ist.

Beim Ausführungsbeispiel gemäss den Fig. 7 und 8 ist die Tragschicht 319 aussen angeordnet, so dass sich die Haftvermittlerschicht 320 innen befindet. Beim Zusammen- und Gegeneinanderdrücken der einander gegenüberliegenden Bereiche des Vorformlings 311 gelangen somit die entsprechenden Bereiche der Haftvermittlerschicht 320 aneinander zur Anlage und miteinander in Verbindung. Die sich dabei bildende Schweissnaht 323 weist trotz der geringen Dicke der Haftvermittlerschicht 320 eine ausreichende Festigkeit auf, da aufgrund der guten Verbindung zwischen Haftvermittlerschicht und Tragschicht 319 letztere an der Schweissverbindung in vollem Umfange teilnimmt und somit zu deren Festigkeit beiträgt. Für das Abfallteil 318 und gegebenenfalls weitere vorhandene Abfallteile gilt das im Zusammenhang mit der Ausführungsform gemäss den Fig. 5 und 6 Gesagte. Die Sperrschicht ist in diesem Falle nachträglich innen anzubringen. Dies kann z. B. durch Sprühen oder· durch Aussülen mit einer geeigneten Substanz erfolgen.

Fig. 9 zeigt den fertigen Hohlkörper, dessen Wandung aus drei Schichten 219, 220 und 222 besteht. Letztere ist nachträglich in einem besonderen Arbeitsgang aufgebracht worden. Beim Ausführungsbeispiel gemäss Fig. 9 befindet sich die Sperrschicht 222 aussen. Im anderen Fall, also bei Anwendung der Ausführungsform gemäss den Fig. 7 und 8, läge die Sperrschicht innen. Es ist auch möglich, die Tragschicht innen- und aussenseitig mit einer Sperrschicht zu versehen.

Die Tatsache, dass für das Aufbringen des die Sperrschicht bildenden Materials ein zusätzlicher Arbeitsgang erforderlich ist, stellt keinen irgendwie ins Gewicht fallenden Nachteil dar. Der zusätzliche Aufwand in Form von Einrichtungen oder Geräten für das Aufbringen der Sperrschicht wird durch die einfachere Ausführung der Extrusionseinrichtung mehr als ausgeglichen. Hinzu kommt der Wegfall der Beschränkungen bezüglich der Auswahl des die Sperrschicht bildenden Materials, da jeweils das Material verwendet werden kann, das unter den gegebenen Umständen im Hinblick auf den angestrebten technischen Effekt und die Wirtschaftlichkeit optimal ist. Auch bezüglich der Dicke der Sperrschicht brauchen keine sich aus dem Herstellungsverfahren und den dazu benutzten Vorrichtungen ergebenden Einschränkungen beachtet zu werden. ·

## Ansprüche

1. Koextrusions-Blasverfahren zum Herstellen von zumindest überwiegend aus Kunststoff bestehenden Hohlkörpen (28), deren Wandung oder zumindest Teilbereiche derselben wenigstens drei Schichten (19, 20, 22) aufweisen, von denen wenigstens eine als Tragschicht (19) dienende Schicht aus thermoplastischem Kunststoff besteht und wenigstens eine andere Schicht (20) aus einem Material besteht, das der Vermittlung der Haftung zwischen Tragschicht (19) und wenigstens einer weiteren Schicht (22) dient, die aus einem Material besteht, das Eigenschaften aufweist, die sich von denen des die Tragschicht (19) bildenden Materials unterscheiden, und zunächst ein Vorformling (11) hergestellt und anschließend durch Anwendung eines Druckunterschiedes in die Gestalt des Hohlkörpers (28) gebracht wird, dadurch gekennzeichnet, daß zunächst ein wenigstens zweischichtiger Vorformling (11) aus wenigstens einer aus thermoplastischem Kunststoff bestehenden Schicht (19) und wenigstens einer die Haftvermittlung bewirkenden Schicht (20) hergestellt und zu dem die Gestalt des Hohlkörpers (28) aufweisenden Zwischenerzeugnis geformt und wenigstens eine weitere Schicht (22) nachträglich in einem besonderen Arbeitsgang aufgebracht wird.

2. Koextrusions-Blasverfahren nach Anspruch 1, dadurch gekennzeichnet, daß das die weitere(n) Schicht(en) (22) bildende Material durch das Füllgut und/oder das den Hohlkörper (28) umgebende Medium hinsichtlich seiner physikalischen und/oder chemischen Eigenschaften nicht verändert wird.

3. Koextrusions-Blasverfahren nach Anspruch 1 oder 2, dadurch gekennzeichnet, daß das die weitere Schicht(en) (22) bildende Material für das Füllgut und/oder das den Hohlkörper (28) umgebende Medium nicht oder nur in geringem Ausmaß permeabel ist.

4. Koextrusions-Blasverfahren nach einem der vorhergehenden Ansprüche, dadurch gekennzeichnet, daß das die weitere(n) Schicht(en) (22) bildende Material eine gewisse elektrische Leitfähigkeit aufweist.

5. Koextrusions-Blasverfahren nach einem der vorhergehenden Ansprüche, dadurch gekennzeichnet, daß nur auf Teilbereichen des eine wenigstens zweischichtige Wandung aufweisenden Zwischenerzeugnisses das die weitere Schicht (22) bildende Material aufgebracht wird.

6. Koextrusions-Blasverfahren nach einem der vorhergehenden Ansprüche, dadurch gekennzeichnet, daß die HaftvermittlerSchicht (20) außen angeordnet wird.

7. Koextrusions-Blasverfahren nach einem der vorhergehenden Ansprüche, dadurch gekennzeichnet, daß die HaftvermittlerSchicht (20) — ggf. zusätzlich — innen angeordnet wird.

8. Koextrusions-Blasverfahren nach einem der vorhergehenden Ansprüche, dadurch gekennzeichnet, daß die weitere Schicht (22) durch Aufspritzen oder Aufsprühen aufgebracht wird.

9. Koextrusions-Blasverfahren nach einem der vorhergehenden Ansprüche, dadurch gekennzeichnet, daß die weitere Schicht (22) durch Tauchen aufgebracht wird.

10. Koextrusions-Blasverfahren nach einem der vorhergehenden Ansprüche, dadurch gekennzeichnet, daß die weitere Schicht (22) aufgestrichen wird.

11. Koextrusions-Blasverfahren nach einem der vorhergehenden Ansprüche, dadurch gekennzeichnet, daß für die aus thermoplastischem Kunststoff bestehende Tragschicht (19) Polyäthylen oder ein anderes Polyolefin verwendet wird.

12. Koextrusions-Blasverfahren nach einem der vorhergehenden Ansprüche, dadurch gekennzeichnet, daß für das die Haftvermittlerschicht (20) bildende Material ein chloriertes Polyolefin verwendet wird.

13. Koextrusions-Blasverfahren nach einem der vorhergehenden Ansprüche, dadurch gekennzeichnet, daß für die als Sperrschicht (22) dienende weitere Schicht Polyvenylidinchlorid vorzugsweise in Form einer hochmolekularen Lösung verwendet wird.

14. Koextrusions-Blasverfahren nach einem der vorhergehenden Ansprüche, dadurch gekennzeichnet, daß für die als Sperrschicht (22) dienende weitere Schicht Zweikomponenten-Lacksysteme aus Polyisocyanat mit OH-Gruppen enthaltenden Polyestern oder mit Alkydharzen verwendet werden.

**Claims**

1. A co-extrusion blow moulding process for the manufacture of hollow bodies (28) which are at least mostly of plastics, the walls or at least portions of the walls of which comprise at least three layers (19, 20, 22) of which at least one layer, serving as a carrier layer (19), is of a thermoplastic synthetic material and at least one other layer (20) is of a material which enables coupling of the carrier layer (19) to at least one further layer (22), the latter being of a material with characteristics differing from those of the material forming the carrier layer (19), said process including initially forming a preform (11) and subsequently shaping it into a hollow body (28) by means of pressure differential, characterised in that initially a preform (11) having at least two layers, namely at least one layer (19) of thermoplastic synthetic material and at least one coupling layer (20), is made and shaped into an intermediate product in the shape of a hollow body (28), an subsequently at least a further layer (22) is applied in a separate operation.

2. A co-extrusion blow moulding process according to Claim 1, characterised in that the material constituting the further layer or layers (22) is not changed in its physical and/or chemical characteristics by the substance to be contained by and/or the medium surrounding the hollow body (28).

3. A co-extrusion blow moulding process according to Claim 1 or 2, characterised in that the material constituting the further layer or layers (22) is not permeable, or only slightly permeable, to the substance to be contained by and/or the medium surrounding the hollow body (28).

4. A co-extrusion blow moulding process according to any one of the preceding claims, characterised in that the material constituting the further layer or layers (22) possesses a certain electrical conductivity.

5. A co-extrusion blow moulding process according to any one of the preceding claims, characterised in that the material constituting the further layer (22) is applied only to portions of the intermediate product having walls with at least two layers.

6. A co-extrusion blow moulding process according to any one of the preceding claims, characterised in that the coupling layer (20) is provided on the outside.

7. A co-extrusion blow moulding process according to any one of the preceding claims, characterised in that the coupling layer (20) is provided, possibly additionally, on the inside.

8. A co-extrusion blow moulding process according to any one of the preceding claims, characterised in that the further layer (22) is applied by spraying.

9. A co-extrusion blow moulding process according to any one of the preceding claims, characterised in that the further layer (22) is applied by dipping.

10. A co-extrusion blow moulding process according to any one of the preceding claims, characterised in that the further layer (22) is spread on.

11. A co-extrusion blow moulding process according to any one of the preceding claims, characterised in that polyethylene or other polyolefin is used for the carrier layer (19) of thermoplastic synthetic material.

12. A co-extrusion blow moulding process according to any one of the preceding claims, characterised in that a chlorinated polyolefin is used for the material forming the coupling layer (20).

13. A co-extrusion blow moulding process according to any one of the preceding claims, characterised in that polyvinylidin chloride, preferably in the form of a macromolecular solution, is used for the further layer serving as a barrier layer (22).

14. A co-extrusion blow moulding process according to any one of the preceding claims, characterised in that two-component lacquer systems of polyisocyonate with polyesters containing OH groups or with alkyd resins is used for the further layer serving as a barrier layer.

**Revendications**

1. Procédé de coextrusion et de soufflage pour la fabrication de corps creux (28) composés de manière au moins prépondérante de matière synthétique et dont les parois ou au moins des zones partielles ont au moins trois couches (19, 20, 22) dont au moins une couche servant de couche de support (19) est composée d'une matière synthétique thermoplastique et dont au moins une autre couche (20) est composée d'une matière qui sert à fournir l'adhérence entre la couche de support (19) et au moins une autre couche (22) qui est composée d'une matière ayant des caractéristiques différentes de celles de la matière formant la couche de support (19), une ébauche (11) étant d'abord formée et puis mise sous forme du corps creux (28) par l'utilisation d'une différence de pression, caractérisé en ce qu'on fabrique d'abord une ébauche (11) à au moins deux couches à partir d'au moins une couche (19) composée d'une matière synthétique thermoplastique et d'au moins une couche (20) causant l'adhérence et qu'on en forme un produit intermédiaire ayant la forme du corps creux (28) et qu'au moins une couche supplémentaire (22) est appliquée ensuite dans une opération séparée.

2. Procédé de coextrusion et de soufflage selon la revendication 1, caractérisé en ce que la matière formant la (les) couche(s) supplémentaire(s) (22) n'est pas altérée en ce qui concerne ces caractéristiques physiques et/ou chimiques par la matière de remplissage et/ou le milieu entourant le corps creux (28).

3. Procédé de coextrusion et de soufflage selon la revendication 1 ou 2, caractérisé en ce que la matière formant la (les) couche(s) supplémentaire(s) (22) n'est pas ou seulement dans une très petite mesure perméable à la matière de remplissage et/ou au milieu entourant le corps creux (28).

4. Procédé de coextrusion et de soufflage selon l'une quelconque des revendications précédentes, caractérisé en ce que la matière formant la (les) couche(s) supplémentaire(s) (22) a une certaine conductivité électrique.

5. Procédé de coextrusion et de soufflage selon l'une quelconque des revendications précédentes, caractérisé en ce qu'on applique seulement sur des zones partielles du produit intermédiaire ayant une paroi à au moins deux couches la matière formant la couche supplémentaire (22).

6. Procédé de coextrusion et de soufflage selon l'une quelconque des revendications précédentes, caractérisé en ce que la couche (20) causant l'adhérence est disposée à l'extérieur.

7. Procédé de coextrusion et de soufflage selon l'une quelconque des revendications précédentes, caractérisé en ce que la couche (20) causant l'adhérence est disposée — éventuellement additionnellement — à l'intérieur.

8. Procédé de coextrusion et de soufflage selon l'une quelconque des revendications précédentes, caractérisé en ce que la couche supplémentaire (22) est appliquée par projection ou pulvérisation.

9. Procédé de coextrusion et de soufflage selon l'une quelconque des revendications précédentes, caractérisé en ce que la couche supplémentaire (22) est appliquée par immersion.

10. Procédé de coextrusion et de soufflage selon l'une quelconque des revendications précédentes, caractérisé en ce que la couche supplémentaire (22) est appliquée par enduction.

11. Procédé de coextrusion et de soufflage selon l'une quelconque des revendications précédentes, caractérisé en ce qu'on utilise du polyéthylène ou une autre polyoléfine pour la couche de support (19) formée de matière thermoplastique.

12. Procédé de coextrusion et de soufflage selon l'une quelconque des revendications précédentes, caractérisé en ce qu'une polyoléfine chlorée est utilisée pour la matière formant la couche (20) causant l'adhérence.

13. Procédé de coextrusion et de soufflage selon l'une quelconque des revendications précédentes, caractérisé en ce qu'on utilise pour la couche supplémentaire servant de couche d'arrêt (22) du chlorure de polyvinyle de préférence sous forme d'une solution de haute densité moléculaire.

14. Procédé de coextrusion et de soufflage selon l'une quelconque des revendications précédentes, caractérisé en ce qu'on utilise pour la couche supplémentaire servant de couche d'arrêt (22) des systèmes de laque à deux composantes formés de polyisocyanate avec des polyestères contenant des groupes OH ou avec des résines alkydes.

FIG.1

FIG.2

FIG.3

FIG.4

FIG.5

FIG.6

FIG.7

FIG.8

FIG.10

2

FIG.9